# EUROPÄISCHE PATENTANMELDUNG

(11) **EP 1 036 690 A2**
(43) Veröffentlichungstag der Anmeldung: **20.09.2000**
(21) Anmeldenummer: 00103836.3
(22) Anmeldetag: 24.02.2000
(51) Int. Cl.: B60K 15/03

(54) **Kraftstoffbehälter für ein Kraftfahrzeug**

(30) Priorität: 17.03.1999 DE 19911877
(71) Anmelder: Mannesmann VDO Aktiengesellschaft, 60388 Frankfurt am Main (DE)
(72) Erfinder: Distelhoff, Markus, Dr., 60594 Frankfurt (DE); Eck, Karl, 60318 Frankfurt (DE); Fröhlich, Winfried, 65520 Bad Camberg (DE); Klöker, Justus, Dr., 61267 Neu-Anspach (DE); Meyer, Knut, Dr., 45239 Essen (DE); Sinz, Wolfgang, Dr., 65843 Sulzbach (DE); Keller, Dieter, 63743 Aschaffenburg (DE); Mohr, Ingo, 56462 Höhn (DE); Rumpf, Bernd, 61130 Nidderau-Windecken (DE); Moser, Rainer, Dr., 65510 Idstein (DE)
(74) Vertreter: Rassler, Andrea, Dipl.-Phys.

(57) **Zusammenfassung**

Ein Kraftstoffbehälter für ein Kraftfahrzeug mit einer aus Kunststoff insbesondere im Spritzgußverfahren gefertigten Wandung (3) ist an seiner Innenseite mit einer Permeationssperre (4) versehen. Die Permeationssperre (4) ist aus einem für Kraftstoffdämpfe nahezu undurchdringlichen Material gefertigt. Die Permeationssperre (4) setzt sich aus miteinander verschweißten Schalenteilen (5, 6) zusammen.

## Beschreibung

Die Erfindung betrifft einen Kraftstoffbehälter für ein Kraftfahrzeug mit einer aus Kunststoff insbesondere im Spritzgußverfahren gefertigten Wandung.

Solche Kraftstoffbehälter werden in heutigen Kraftfahrzeugen häufig eingesetzt und sind damit bekannt. Hierbei ist der Kraftstoffbehälter meist aus mehreren im Spritzgußverfahren gefertigten und anschließend miteinander verschweißten Schalenteilen zusammengesetzt. Hierdurch lassen sich sehr einfach komplizierte Formen des Kraftstoffbehälters herstellen und Einbauten darin einsetzen. Weiterhin hat der Kraftstoffbehälter wegen seiner Wandung aus Kunststoff ein sehr geringes Gewicht.

Nachteilig bei dem bekannten Kraftstoffbehälter ist, daß er für Kraftstoffdämpfe sehr permeabel ist. Deshalb kann Kraftstoff durch die Wandung in die Umwelt gelangen.

Der Erfindung liegt das Problem zugrunde, einen Kraftstoffbehälter der eingangs genannten Art so zu gestalten, daß er ein besonders geringes Gewicht hat und daß möglichst wenig Kraftstoffdämpfe die Wandung durchdringen können.

Dieses Problem wird erfindungsgemäß dadurch gelöst, daß auf der Wandung zumindest eine Permeationssperre für Kraftstoffdämpfe angeordnet ist.

Durch diese Gestaltung können Kraftstoffdämpfe entsprechend der Gestaltung der Permeationssperre nicht oder nur in geringen Mengen die Wandung durchdringen. Die Permeationssperre besteht hierbei aus einem für den Kraftstoff eine besonders geringe Permeation aufweisenden Material. Da die Wandung bei dem bekannten Kraftstoffbehälter aus Kunststoff gefertigt ist, hat der erfindungsgemäße Kraftstoffbehälter ein geringes Gewicht und läßt sich in nahezu beliebigen Formen fertigen.

Die Permeationssperre könnte beispielsweise als Anstrich außen auf der Wandung ausgebildet sein. Da die Außenseite des im Kraftfahrzeug montierten Kraftstoffbehälters mechanischen Belastungen unterliegt, kann die Permeationssperre beschädigt werden und auf Dauer Kraftstoff die Wandung durchdringen. Die Permeationssperre verhindert ein Durchdringen der Wandung mit Kraftstoff besonders zuverlässig und dauerhaft, wenn die Permeationssperre an der Innenseite der aus Kunststoff gefertigten Wandung angeordnet ist. Das Aufbringen der Permeationssperre kann zudem bei heutigen Kraftstoffbehältern vor deren Verschweißen erfolgen, da die Permeationssperre keine Änderungen oder Anpassungen von auf der Außenseite des Kraftstoffbehälters angeordneten Halterungen und Anschlußstutzen erfordert.

Die Permeationssperre läßt sich in einer Serienfertigung des erfindungsgemäßen Kraftstoffbehälters sehr einfach auf die Wandung aufbringen, wenn sie eine aus einem besonders permeationsdichten Material gefertigte Folie aufweist.

Die Permeationssperre trägt gemäß einer anderen vorteilhaften Weiterbildung der Erfindung zur Stabilität der Wandung bei, wenn die Permeationssperre Schalenteile mit einer besonders geringen Permeabilität für Kraftstoffdämpfe aufweist.

Die Wandung ist für Kraftstoff gemäß einer anderen vorteilhaften Weiterbildung der Erfindung nahezu undurchdringlich, wenn die Permeationssperre aus Metall gefertigt ist. Hierbei eignet sich beispielsweise Stahlblech oder Aluminiumblech.

Zur weiteren Verringerung des Gewichts der Wandung trägt es gemäß einer anderen vorteilhaften Weiterbildung der Erfindung bei, wenn die Permeationssperre aus einem besonders permeationsdichten Kunststoff gefertigt ist. Hierbei kann die Permeationssperre selbstverständlich mehrschichtig aufgebaut sein. Die aus Kunststoff oder aus Metall gefertigte Permeationssperre kann beispielsweise in die Spritzgußform der Schalenteile für die Wandung eingesetzt und anschließend umspritzt werden.

In heutigen Kraftstoffbehältern zu montierende Leitungen und Bauteile lassen sich in dem Kraftstoffbehälter einfach anordnen, wenn in dem Kraftstoffbehälter zu verlegende Leitungen und Bauteile an der Permeationssperre befestigt sind.

Zwischen zwei aneinanderstoßenden Bereichen von Schalenteilen der Permeationssperre könnte man beispielsweise eine Dichtung anordnen. Eine solche Dichtung läßt sich jedoch gemäß einer anderen vorteilhaften Weiterbildung der Erfindung vermeiden, wenn die Schalenteile an ihren aneinanderstoßenden Bereichen miteinander verschweißt sind.

Die Erfindung läßt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: schematisch einen erfindungsgemäßen Kraftstoffbehälter mit aus Kunststoff im Spritzgußverfahren gefertigten Schalenteilen,
- Fig.2: den Kraftstoffbehälter aus Figur 1 nach einer Verschweißung der Schalenteile,
- Fig.3: ein Schalenteil einer weiteren Ausführungsform des erfindungsgemäßen Kraftstoffbehälters,
- Fig.4: mehrere Bauteile für eine obere Hälfte einer weiteren Ausführungsform des erfindungsgemäßen Kraftstoffbehälters.

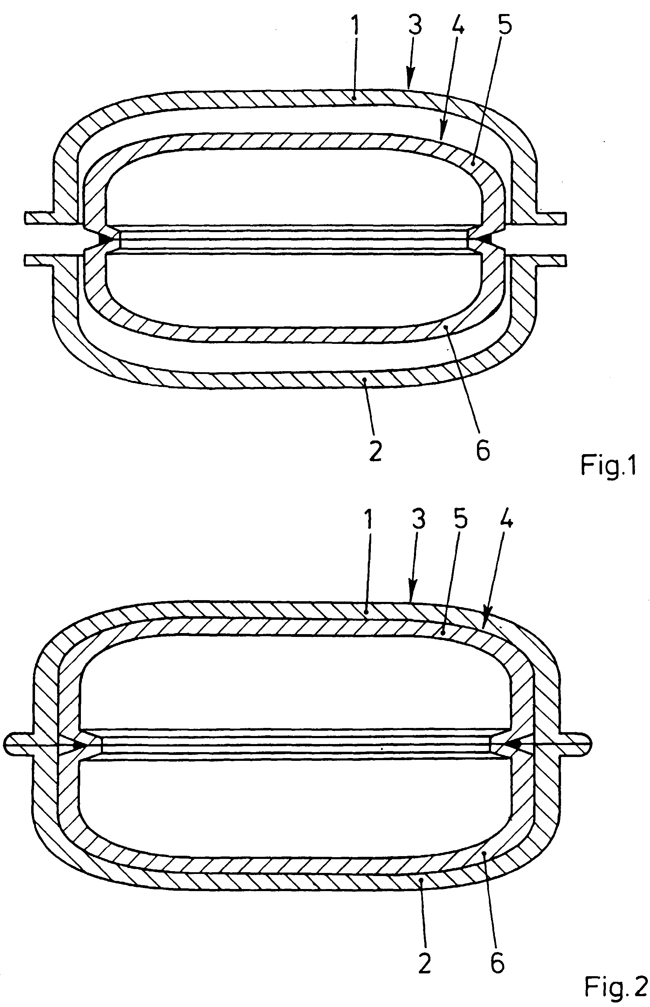

Die Figur 1 zeigt schematisch einen erfindungsgemäßen Kraftstoffbehälter für ein Kraftfahrzeug während der Montage. Zur Vereinfachung der Zeichnung sind Einfüllstutzen oder innerhalb des Kraftstoffbehälters anzuordnende Bauteile nicht dargestellt. Der Kraftstoffbehälter hat eine aus zwei Schalenteilen 1, 2 gefertigte Wandung 3 und eine darin angeordnete Permeationssperre 4. Die Permeationssperre 4 weist zwei miteinander stoffschlüssig verbundene Schalenteile 5, 6 mit einer besonders geringen Permeabilität für Kraftstoffdämpfe auf. Die Schalenteile 5, 6 der Permeationssperre 4 können beispielsweise aus Kunststoff oder aus Metall gefertigt sein und weisen eine der Innenkontur der äußeren Schalenteile 1, 2 entsprechende Außenkontur auf.

Die Figur 2 zeigt den Kraftstoffbehälter aus Figur 1 nach einer Verschweißung der äußeren Schalenteile 1, 2 der Wandung 3. Die äußeren Schalenteile 1, 2 sorgen für eine ausreichende Stabilität der Wandung 3. Hierbei läßt sich beispielsweise ein bekannter Kraftstoffbehälter durch den Einsatz der entsprechend gestalteten Permeationssperre 4 nachrüsten.

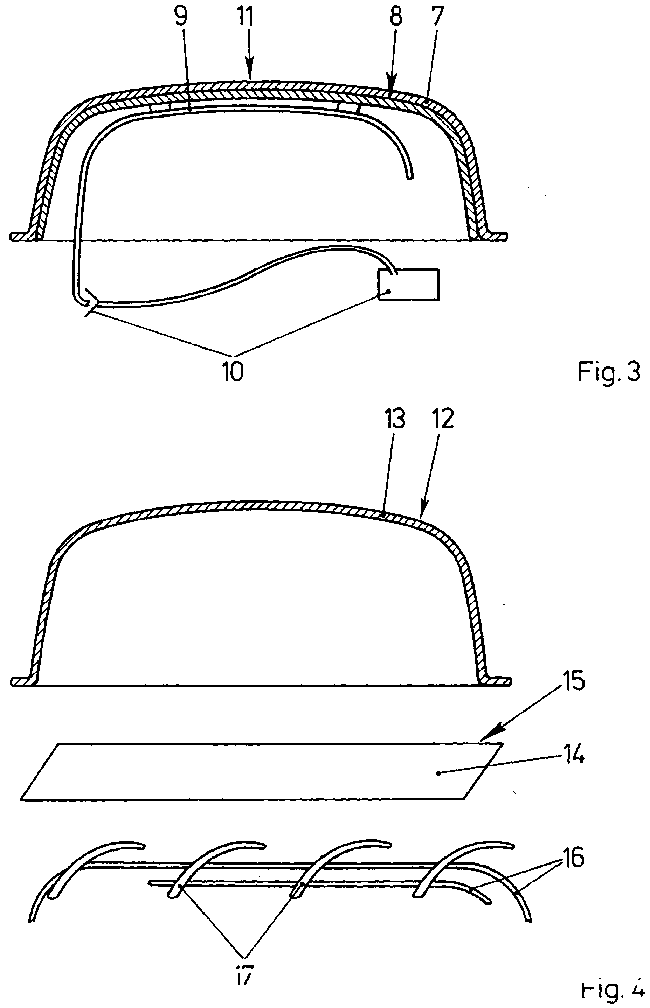

Die Figur 3 zeigt einen oberen Bereich einer Wandung 11 einer weiteren Ausführungsform des erfindungsgemäßen Kraftstoffbehälters, bei dem ein aus Kunststoff im Spritzgußverfahren gefertigtes Schalenteil 7 an seiner Innenseite mit einer Permeationssperre 8 versehen ist. Die Permeationssperre 8 dient dabei als Halterung für in dem Kraftstoffbehälter anzuordnende Leitungen 9 und als Schwalltopf oder als Saugstrahlpumpe ausgebildete Bauteile 10.

Figur 4 zeigt schematisch den Aufbau einer Wandung 12 einer weiteren Ausführungsform des erfindungsgemäßen Kraftstoffbehälters vor der Montage. Die Wandung 12 hat ein aus Kunststoff im Spritzgußverfahren gefertigtes Schalenteil 13. Die Innenseite des Schalenteils 13 läßt sich mit einer als Folie 14 gestalteten Permeationssperre 15 versehen. Die Folie 14 kann hierfür beispielsweise durch ein Erwärmen an die innere Kontur des Schalenteils 13 angepaßt und anschließend mit diesem verklebt werden. Nach der Montage der Folie 14 werden in dem Kraftstoffbehälter anzuordnende Leitungen 16 an der Permeationssperre 15 befestigt. Die Leitungen 16 sind zur gemeinsamen Montage an Haltebügeln 17 befestigt.

## Patentansprüche

1. Kraftstoffbehälter für ein Kraftfahrzeug mit einer aus Kunststoff insbesondere im Spritzgußverfahren gefertigten Wandung, **dadurch gekennzeichnet**, daß auf der Wandung (3, 11, 12) zumindest eine Permeationssperre (4, 8, 15) für Kraftstoffdämpfe angeordnet ist.

2. Kraftstoffbehälter nach Anspruch 1, **dadurch gekennzeichnet**, daß die Permeationssperre (4, 8, 15) an der Innenseite der aus Kunststoff gefertigten Wandung (3, 11, 12) angeordnet ist.

3. Kraftstoffbehälter nach Anspruch 1 oder 2, **dadurch gekennzeichnet**, daß die Permeationssperre (15) eine aus einem besonders permeationsdichten Material gefertigte Folie (14) aufweist.

4. Kraftstoffbehälter nach Anspruch 1 oder 2, **dadurch gekennzeichnet**, daß die Permeationssperre (4) Schalenteile (5, 6) mit einer besonders geringen Permeabilität für Kraftstoffdämpfe aufweist.

5. Kraftstoffbehälter nach zumindest einem der vorhergehenden Ansprüche, **dadurch gekennzeichnet**, daß die Permeationssperre (4, 8, 15) aus Metall gefertigt ist.

6. Kraftstoffbehälter nach zumindest einem der vorhergehenden Ansprüche, **dadurch gekennzeichnet**, daß die Permeationssperre (4, 8, 15) aus einem besonders permeationsdichten Kunststoff gefertigt ist.

7. Kraftstoffbehälter nach zumindest einem der vorhergehenden Ansprüche, **dadurch gekennzeichnet**, daß in dem Kraftstoffbehälter zu verlegende Leitungen (9, 16) und Bauteile (10) an der Permeationssperre (8, 15) befestigt sind.

8. Kraftstoffbehälter nach zumindest einem der vorhergehenden Ansprüche, **dadurch gekennzeichnet**, daß die Schalenteile (1, 2, 5, 6, 7, 13) an ihren aneinanderstoßenden Bereichen miteinander verschweißt sind.
